# EUROPÄISCHE PATENTANMELDUNG

(11) **EP 1 739 365 A1**
(43) Veröffentlichungstag der Anmeldung: **03.01.2007**
(21) Anmeldenummer: 05013827.0
(22) Anmeldetag: 27.06.2005
(51) Int. Cl.: F24F 1/00, F24D 19/06, F28D 1/02, F28F 1/12, F28F 1/32, F24F 13/22, F28F 17/00

(54) **Heizung und/oder Kühlung eines Raumes**

(71) Anmelder: Frog S.r.l./GmbH, 39050 Steinmannwald Leifers, Provinz Bozen (IT)
(72) Erfinder: Gaspera, Bruno Della, St. Vigil in Enneberg 39030 Bozen (IT)
(74) Vertreter: Dendorfer, Claus

(57) **Zusammenfassung**

Eine Wärmetauschvorrichtung (10) weist gemäß einem ersten Aspekt ein Wandprofil (14), ein Abdeckprofil (42) und mindestens ein zwischen dem Wandprofil (14) und dem Abdeckprofil (42) angeordnetes Wärmetauschregister (30) sowie eine Ventilationseinrichtung zum Befördern von Luft mit einer Strömungsrichtung von oben nach unten durch das Wärmetauschregister (30) auf. Gemäß einem zweiten Aspekt weist eine Wärmetauschvorrichtung (10) eine Lamelleneinheit (36) mit mehreren Lamellenabschnitten (44) und mehreren Seitenabschnitten (46, 48) in einer schlangenlinienförmigen Anordnung auf. Ferner umfaßt eine Kondenswasserrinne (12) ein Halteprofil (66) und ein flexibles und in dem Halteprofil (66) angeordnetes Rinnenprofil (68), das durch entlang der Kondenswasserrinne (12) angeordnete Zwischenstücke in unterschiedliche Konfigurationen gedrängt wird, um eine von einem Mittelteil des Rinnenprofils (68) gebildete, geneigte Ablaufrinne für Kondenswasser zu schaffen. Ein Verfahren zur Herstellung eines Wärmetauschregisters (30) und ein Verfahren zum Anbringen eines Heiz- und/oder Kühlsystems an einer Wand (56) nahe einem Boden (58) eines Raumes werden beschrieben.

## Beschreibung

Die Erfindung betrifft das technische Gebiet des Heizens oder Kühlens oder wahlweisen Heizens und Kühlens eines Raumes. Insbesondere betrifft die Erfindung ein Heiz- und/oder Kühlsystem, das die Fußleiste (auch als Kehrleiste oder Sockelleiste bezeichnet) eines Raumes bildet, und das an einer Wand des Raumes, nahe an dessen Fußboden, angeordnet ist. Der Raum kann beispielsweise ein Wohnraum oder ein Büro sein, aber auch ein beweglicher Raum wie z.B. der Fahrgastraum eines Omnibusses oder eines Flugzeugs.

Aus WO 02/103246 A2 ist eine Wärmetauschvorrichtung bekannt, die zur Heizung eines Raumes optimiert ist. Die Wärmetauschvorrichtung weist Heizregister mit jeweils einer Vielzahl von im Querschnitt U-förmig gebogenen Lamellenelementen auf. Zur Unterstützung der Heizwirkung ist in einer Ausführungsform ein Radiallüfter oben in der Wärmetauschvorrichtung eingebaut, der Luft mit einer Strömungsrichtung von unten nach oben durch das Heizregister saugt. Eine für einen Kühlbetrieb vorgesehene Ausführungsform der Wärmetauschvorrichtung ist zur Montage nahe einer Raumdecke vorgesehen, wobei eine Auffangrinne für Kondenswasser unter der Wärmetauschvorrichtung angebracht wird.

Diese bekannte Wärmetauschvorrichtung stellt bereits einen erheblichen Fortschritt dar. Es ist jedoch nicht vorgesehen, diese Wärmetauschvorrichtung für einen kombinierten Heiz- und Kühlbetrieb zu verwenden. Ferner sind die Herstellung eines Wärmetauschregisters der Wärmetauschvorrichtung und die Montage der Kondenswasser-Auffangrinne relativ aufwendig.

Es ist daher Aufgabe der Erfindung, die genannten Probleme zumindest teilweise zu vermeiden. In manchen Ausgestaltungen soll sich die Wärmetauschvorrichtung besonders gut für einen Kühlbetrieb oder für einen wahlweisen Heiz- und Kühlbetrieb eignen. In weiteren Ausgestaltungen wird eine weniger aufwendige Herstellung der Wärmetauschvorrichtung angestrebt. Schließlich sollen in weiteren Ausgestaltungen die Herstellung und/oder Montage der Kondenswasserrinne vereinfacht werden.

Die Erfindung ist durch die unabhängigen Ansprüche definiert. Die abhängigen Ansprüche betreffen bevorzugte Ausgestaltungen der Erfindung.

Gemäß einem ersten Aspekt der Erfindung ist die Wärmetauschvorrichtung zur Montage nahe dem Boden eines Raumes vorgesehen und mit einer Ventilationseinrichtung ausgestattet, um Luft mit einer Strömungsrichtung von oben nach unten durch das Wärmetauschregister zu befördern. Die Montageposition nahe dem Boden des Raumes ermöglicht einen wahlweisen Heiz- und Kühlbetrieb. Auch wenn die Wärmetauschvorrichtung ausschließlich zur Kühlung dienen soll, ist die Montageposition nahe dem Boden optisch besonders ansprechend. Überdies verringert die Kühlung am kältesten Ort des Raumes ― nämlich nahe des Bodens - den durch die Kühlung verursachten Feuchtigkeitsverlust der Raumluft. Die Strömungsrichtung von oben nach unten verringert die Verschmutzung des Systems, weil die Luft nicht in unmittelbarer Bodennähe angesaugt wird.

Die Ventilationseinrichtung kann in manchen Ausgestaltungen lediglich aus einem oder mehreren Luftverteilrohr/en bestehen, das/die in einem oberen Bereich - z.B. einem oberen Abschlussprofil - der Wärmetauschvorrichtung angeordnet ist/sind und nach weisende Luftauslassöffnungen aufweist/aufweisen. Derartige Luftverteilrohre können mit einer beliebigen Quelle von Raum- oder Außenluft verbunden werden. In bevorzugten Ausgestaltungen ist jedoch ein zur Ventilationseinrichtung gehörender Ventilator vorgesehen, der Luft in das mindestens eine Luftverteilrohr einbläst.

Gemäß einem zweiten Aspekt der Erfindung weist die Wärmetauschvorrichtung mindestens eine Lamelleneinheit mit einem schlangenlinienförmigen Querschnitt und mehreren Lamellenabschnitten sowie mehreren Seitenabschnitten auf. Beispielsweise können in jeder Lamelleneinheit mindestens drei Lamellenabschnitte oder mindestens fünf Lamellenabschnitte oder mindestens acht Lamellenabschnitte - und jeweils entsprechend viele Seitenabschnitte - vorgesehen sein. Im Vergleich zu den aus WO 02/103246 A2 bekannten, U-förmig gebogenen Lamellenelementen wird hierdurch der zur Herstellung von Wärmetauschregistern erforderliche Aufwand beträchtlich verringert. In Versuchen ergab sich eine Reduzierung der Herstellungskosten für das Wärmetauschregister um ungefähr 50 %.

Die Seitenabschnitte der Wärmetauschregister erstrecken sich vorzugsweise quer zu den Lamellenabschnitten. In bevorzugten Ausführungsformen ist unter dem Begriff "quer" eine ungefähr normale oder senkrechte Anordnung zu verstehen. Allgemein soll jedoch der Begriff "quer" nicht auf 90°-Winkel beschränkt sein, sondern auch Anordnungen umfassen, bei denen die Lamellenabschnitte schräg zu dem mindestens einen Rohr und/oder die Seitenabschnitte schräg zu den Lamellenabschnitten ausgerichtet sind.

In bevorzugten Ausgestaltungen sind an einer Seite des Wärmetauschregisters schmale und an der anderen Seite des Wärmetauschregisters breite Seitenabschnitte vorgesehen. Das Wärmetauschregister ist dann vorzugsweise derart symmetrisch - beispielsweise mit zwischen den Seitenabschnitten mittigen Rohren - ausgestaltet, dass es in unterschiedlichen Orientierungen in der Wärmetauschvorrichtung montierbar ist. Hierdurch kann bei der Montage der Wärmetauschvorrichtung der gewünschte thermische Kontakt zwischen dem Wärmetauschregister und einem seitlichen Abdeckprofil in zwei Stufen eingestellt werden, um einerseits eine gute Heiz- und/oder Kühlwirkung zu erzielen und andererseits Kondenswasserbildung an der Außenseite des Abdeckprofils zu vermeiden.

Gemäß einem dritten Aspekt der Erfindung ist eine insbesondere für den Kühlbetrieb erforderliche Kondenswasserrinne mit einem Halteprofil und einem flexiblen - z.B. aus Kunststoff gefertigten - Rinnenprofil vorgesehen, wobei das Rinnenprofil durch Zwischenstücke entlang der Kondenswasserrinne in eine Reihe unterschiedlicher und ineinander übergehender Konfigurationen gedrängt wird, um eine geneigte Ablaufrinne für das Kondenswasser zu schaffen. Die Zwischenstücke, die beispielsweise unterschiedliche Breiten aufweisen können, erlauben somit die Verwendung eines Rinnenprofils, das in seinem Grundzustand eine über seine Länge hinweg gleichbleibende Querschnittsform aufweist.

Als Konfiguration soll in diesem Zusammenhang insbesondere die räumliche Lage des Rinnenprofils im Halteprofil und/oder die Krümmung eines Mittelteils des Rinnenprofils angesehen werden. In manchen Ausgestaltungen wird das Rinnenprofil durch die Zwischenstücke ohne Veränderung seiner Form im Halteprofil angehoben und/oder abgesenkt, während in anderen Ausführungsformen nur die Krümmung des Rinnenprofils verändert und dadurch der tiefste Punkt des Mittelteils in seiner Höhe verändert wird. In bevorzugten Ausgestaltungen werden jedoch die beiden gerade genannten Effekte kombiniert. Insgesamt läßt sich durch geeignete Verwendung der Zwischenstücke in vorteilhaften Ausführungsformen eine Neigung der effektiv gebildeten Kondenswasser-Ablaufrinne relativ zu dem Halteprofil um einige wenige Grad - z.B. zwischen 1° und 5° - über eine Länge von mindestens einigen Metern - z.B. mindestens 2 m oder mindestens 3 m oder mindestens 4 m - erzielen.

In bevorzugten Ausführungsformen weisen das erfindungsgemäße System zur Heizung und/oder Kühlung eines Raumes, das erfindungsgemäße Verfahren zur Herstellung eines Wärmetauschregisters und das erfindungsgemäße Verfahren zum Anbringen eines Heiz- und/oder Kühlsystems an einer Wand Merkmale auf, die den oben beschriebenen und/oder den in den Vorrichtungsansprüchen definierten Merkmalen entsprechen.

Weitere Merkmale, Aufgaben und Vorteile der Erfindung gehen aus der folgenden ausführlichen Beschreibung mehrerer Ausführungsbeispiele und Ausführungsalternativen der Erfindung hervor. Es wird auf die Zeichnungen verwiesen, in denen zeigen:
Fig. 1 einen Querschnitt des Heiz- und/oder Kühlsystems nach einem Ausführungsbeispiel der Erfindung,
Fig. 2 ein auseinandergezogene Darstellung des in Fig. 1 gezeigten Systems,
Fig. 3 einen Querschnitt des an einer Wand montierten Systems gemäß Fig. 1,
Fig. 4 eine Seitenansicht eines Wärmetauschregisters in dem System gemäß Fig. 1,
Fig. 5 eine Draufsicht auf das Wärmetauschregister gemäß Fig. 5,
Fig. 6 eine perspektivische Ansicht einer Lamelleneinheit in dem Wärmetauschregister gemäß Fig. 4 und Fig. 5,
Fig. 7 einen vergrößerten Querschnitt durch die Kondenswasserrinne mit derselben Schnittebene wie in Fig. 1 - Fig. 3,
Fig. 8 und Fig. 9 je einen vergrößerten Querschnitt durch die Kondenswasserrinne von Fig. 7 mit anderen Schnittebenen entlang der Kondenswasserrinne,
Fig. 10 einen vergrößerten Querschnitt durch die Kondenswasserrinne in einer Ausführungsalternative, und
Fig. 11 eine Ansicht eines Lamellenblechs, das zur Herstellung einer Lamelleneinheit für das Wärmetauschregister von Fig. 1 - Fig. 6 verwendet wird.

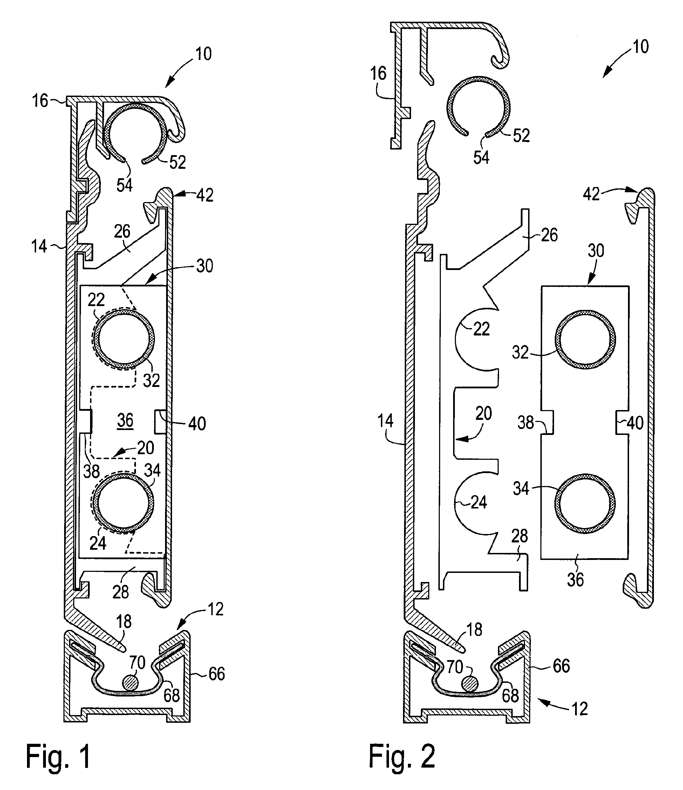

Das in Fig. 1 bis Fig. 3 im Querschnitt gezeigte System dient in unterschiedlichen Ausgestaltungen zur wahlweisen Heizung und Kühlung oder nur zur Heizung oder nur zur Kühlung eines Raumes. Das System ist zur Montage an einer Wand eines Raumes unmittelbar über dem Fußboden - ähnlich wie eine Fußleiste oder Kehrleiste - ausgestaltet.

Allgemein weist das System eine Wärmetauschvorrichtung 10 und eine Kondenswasserrinne 12 auf, die im vorliegenden Ausführungsbeispiel als zwei getrennte Baugruppen ausgebildet sind. In Ausführungsalternativen können dagegen die Wärmetauschvorrichtung 10 und die Kondenswasserrinne 12 miteinander verbunden oder als einheitliche Baugruppe ausgestaltet sein. Es versteht sich, dass die Kondenswasserrinne 12 nur erforderlich ist, wenn das System zumindest auch als Kühlsystem verwendet werden soll.

Die Wärmetauschvorrichtung 10 weist ein Wandprofil 14 aus einem elastischen Kunststoffmaterial auf. Das Wandprofil 14 erstreckt sich über die gesamte Länge der Wärmetauschvorrichtung 10 und isoliert somit die Wärmetauschvorrichtung 10 zur Wand hin. Am oberen Ende des Wandprofils 14 ist ein aus Aluminium gefertigtes Abschlussprofil 16 aufgesetzt. Am unteren Ende weist das Wandprofil 14 eine schräg nach unten verlaufende Lippe 18 auf, die entstehendes Kondenswasser in die Kondenswasserrinne 12 leitet oder - wenn das System nur zur Heizung vorgesehen ist und daher keine Kondenswasserrinne aufweist ― als elastische Dichtlippe am Boden des zu beheizenden Raumes aufliegt.

In der Wärmetauschvorrichtung 10 sind im Abstand von ca. 10 cm - 40 cm Träger 20 vorgesehen, die als flexible Kunststoff-Formteile ausgestaltet sind. Jeder Träger 20 ist mit zwei Nasen in entsprechende Nuten des Wandprofils 14 eingehängt. Jeder Träger 20 weist zwei Aufnahmen 22, 24 sowie zwei raumseitig angeordnete Arme 26, 28 auf.

Ein Wärmetauschregister 30 ist aus zwei parallel verlaufenden Rohren 32, 34 und mehreren Lamelleneinheiten 36 gebildet. Die Rohre 32, 34, die im hier beschriebenen Ausführungsbeispiel aus Kupfer bestehen, werden von einem Heiz- bzw. Kühlmedium durchflossen. Die Lamelleneinheiten 36 sind beispielsweise aus je einem dünnen, schlangenlinienförmig gebogenen Aluminiumblech geformt. In einer Höhe zwischen den beiden Rohren 32, 34 weist jede Lamelleneinheit 36 an beiden Seiten Öffnungen 38, 40 zur Verringerung der mechanischen Belastung des Wärmetauschregisters 30 bei einer ungleichmäßigen thermischen Expansion oder Kontraktion der beiden Rohre 32, 34 auf, wie dies in WO 02/103246 A2 ausführlich beschrieben ist.

Ein Abdeckprofil 42 ist mit zwei Nuten in die Arme 26, 28 des Trägers 20 eingehängt. Das Abdeckprofil 42, das beispielsweise ein flaches Strangpressprofil aus Aluminium sein kann, bildet den Abschluss der Wärmetauschvorrichtung 10 zum Raum hin. Die der Wand zugewandte Seite des Abdeckprofils 42 steht mit einer Seite des Wärmetauschregisters 30 in flächigem Kontakt.

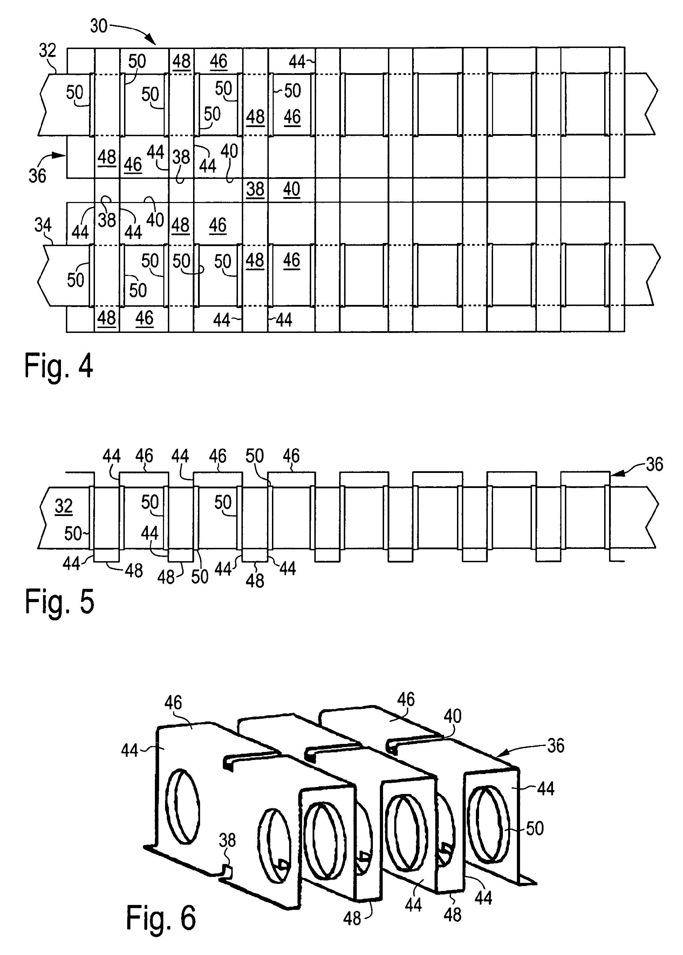

Fig. 4 und Fig. 5 zeigen einen Teil des Wärmetauschregisters 30 mit Abschnitten der beiden Rohre 32, 34, auf denen eine Lamelleneinheit 36 angebracht ist. Weitere, nicht gezeigte Lamelleneinheiten schließen sich unmittelbar rechts und links an die in Fig. 4 und Fig. 5 dargestellte Lamelleneinheit 36 an.

Aus Fig. 5 wird der schlangenlinienförmige Verlauf des zur Lamelleneinheit 36 gebogenen Aluminiumblechs deutlich. Die Lamelleneinheit 36 weist mehrere Lamellenabschnitte 44 auf, von denen je zwei an ihren Längsseiten durch je einen Seitenabschnitt 46, 48 verbunden sind. Die Lamellenabschnitte 44 verlaufen zueinander parallel und quer zu den Rohren 32, 34. Die beiden Rohre 32, 34 durchdringen jeden Lamellenabschnitt 44, wobei an den Lamellenabschnitten 44 je zwei schmale Kontaktgrate 50 zur Verbesserung des thermischen Kontakts zwischen dem Lamellenabschnitt 44 und den beiden Rohren 32, 34 ausgebildet sind.

Die Seitenabschnitte 46 auf einer Seite der Lamelleneinheit 36 sind breiter als die Seitenabschnitte 48 auf der anderen Seite der Lamelleneinheit 36; im vorliegenden Ausführungsbeispiel sind die Seitenabschnitte 46 je 12 mm und die Seitenabschnitte 48 je 6 mm breit.

Fig. 6 veranschaulicht nochmals die Form der Lamelleneinheit 36. Die unterschiedlichen Breiten der Seitenabschnitte 46, 48, die Öffnungen 38, 40 in den Seitenabschnitten 46, 48 und die Kontaktgrate 50 der Lamellenabschnitte 44 sind klar zu erkennen.

Im vorliegenden Ausführungsbeispiel gemäß Fig. 4 und Fig. 5 enthält die Lamelleneinheit 36 fünfzehn Lamellenabschnitte 44 und je sieben vollständige Seitenabschnitte 46 und 48, während in der Ausgestaltung gemäß Fig. 6 nur sechs Lamellenabschnitte 44 und entsprechend weniger Seitenabschnitte 46, 48 vorgesehen sind. In weiteren Ausführungsalternativen kann jede Lamelleneinheit 36 mehr oder weniger Lamellen- und Seitenabschnitte 44, 46, 48 aufweisen. Im Extremfall, bei dem allerdings nicht mehr von einem schlangenlinienförmigen Verlauf der Lamelleneinheit 36 gesprochen werden kann, weist jede Lamelleneinheit 36 nur einen einzigen Lamellen- und einen einzigen Seitenabschnitt oder zwei Lamellenabschnitte und einen diese verbindenden Seitenabschnitt oder sogar gar keine Seitenabschnitte auf.

Das Wärmetauschregister 30 wird von den Trägern 20 gehalten. Jeder Träger 20 ragt zwischen zwei benachbarten Lamellenabschnitten 44 einer Lamelleneinheit 36 bis zu den Rohren 32, 34 in das Wärmetauschregister 30 hinein. Die Rohre 32, 34 ruhen in den Ausnahmen 22, 24 der Träger 20. Weil die Träger 20 aus elastischem Kunststoffmaterial bestehen, können das Wärmetauschregister 30 und auch das seitliche Abdeckprofil 42 leicht auf die Träger 20 aufgesetzt und von diesen abgenommen werden und werden dennoch sicher gehalten.

Im hier beschriebenen Ausführungsbeispiel sind die Träger 20 beispielsweise 5 mm dick und damit dünner als die Breite der schmäleren Seitenabschnitte 48. Ferner sind die Rohre 32, 34 im Wärmetauschregister 30 mittig zwischen den Seitenabschnitten 46, 48 angeordnet. Das Wärmetauschregister 30 kann daher in zweierlei Orientierungen in der Wärmetauschvorrichtung 10 angeordnet werden, nämlich entweder so, dass die breiteren Seitenabschnitte 46 innen am seitlichen Abdeckprofil 42 anliegen, oder so, dass die schmäleren Seitenabschnitte 48 innen am seitlichen Abdeckprofil 42 anliegen. In der erstgenannten Orientierung ist die Wärmeübertragung zwischen dem Wärmetauschregister 30 und dem metallischen Abdeckprofil 42 wesentlich höher - z.B. ungefähr doppelt so groß - wie in der zweitgenannten Orientierung.

Die erstgenannte Orientierung maximiert also die Heiz- oder Kühlwirkung des Systems, weil das Abdeckprofil 42 als wirksame Wärmeabstrahl- oder Wärmeaufnahmefläche eingesetzt wird. Diese Orientierung wird vorzugsweise verwendet, wenn die Wärmetauschvorrichtung 10 hauptsächlich in einem Heizbetrieb und nur selten in einem Kühlbetrieb - und wenn, dann bei relativ geringer Luftfeuchtigkeit - arbeitet. In manchen Ausgestaltungen beträgt die Temperaturdifferenz zwischen dem durch die Rohre 32, 34 fließenden Heiz- oder Kühlmedium und dem seitlichen Abdeckprofil 42 in dieser Orientierung ungefähr 10 °C.

Bei der zweitgenannten Orientierung ist dagegen das Abdeckprofil 42 thermisch weniger stark an das Wärmetauschregister 30 gekoppelt; beispielsweise kann in einem Kühlbetrieb eine Temperaturdifferenz zwischen dem Kühlmedium und dem Abdeckprofil 42 von mehr als 10 °C - vorzugsweise ungefähr 15 °C ― bestehen. Diese Orientierung ist insbesondere in Ländern mit warmem und feuchtem Klima vorzuziehen, weil dadurch im Kühlbetrieb eine störende Kondenswasserbildung an der dem Rauminneren zugewandten Seite des Abdeckprofils 42 vermieden wird.

Wie in Fig. 1 bis Fig. 3 gezeigt, ist in dem oberen Abschlussprofil 16 der Wärmetauschvorrichtung 10 ferner ein Luftverteilrohr 52 vorgesehen, das in kurzen Abständen nach unten gerichtete Luftauslassöffnungen 54 aufweist. Im vorliegenden Ausführungsbeispiel ist das Luftverteilrohr 52 zwischen zwei Haltenasen des oberen Abschlussprofils 16 eingesteckt. Das Luftverteilrohr 52, das z.B. einen Durchmesser von ungefähr 16 mm aufweisen kann, wird durch die beiden Haltenasen wie in einem Clip-System gehalten und kann, falls erforderlich, leicht ausgetauscht werden.

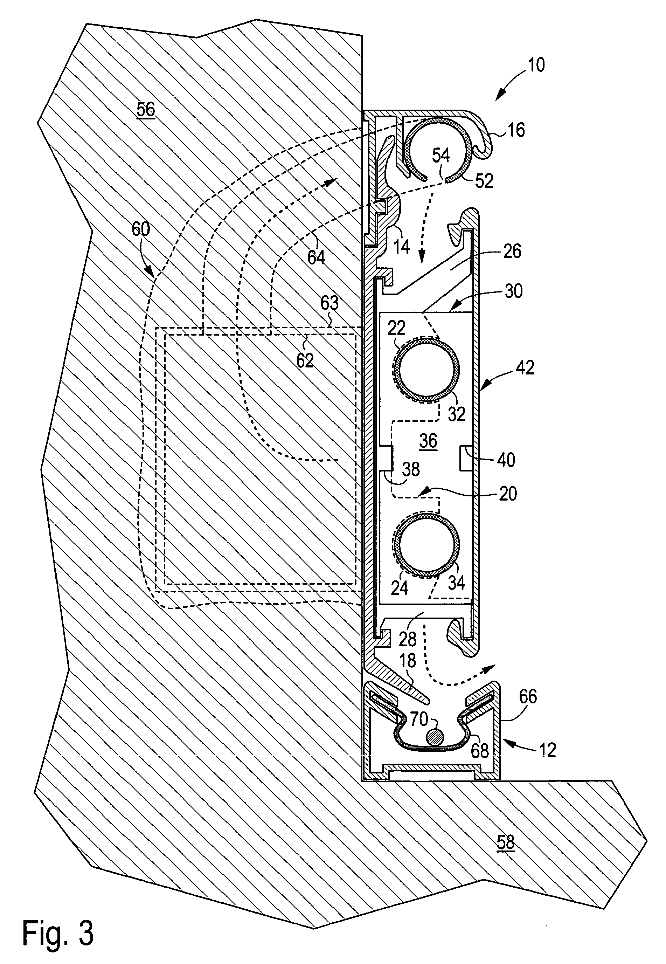

In einem Kühlbetrieb der Wärmetauschvorrichtung 10 wird Raumluft in das Luftverteilrohr 52 eingeblasen. Diese Luft strömt nach unten aus dem Luftverteilrohr 52 aus, so dass sich eine von oben nach unten gerichtete Luftströmung durch das Wärmetauschregister 30 in Richtung der in Fig. 3 gezeigten gestrichelten Pfeile ergibt. In Ausgestaltungen, die insbesondere für einen Heizbetrieb geeignet sind, kann die Wärmetauschvorrichtung 10 auch ohne das Luftverteilrohr 52 aufgebaut werden; das obere Abschlussprofil 16 braucht hierzu in seiner Form nicht verändert zu werden.

In Fig. 3 sind ferner Abschnitte der Wand 56 und des Bodens 58 des Raumes, in dem das Heiz- und/oder Kühlsystem montiert ist, dargestellt. In einem Ausführungsbeispiel sind in der Wand 56 hinter der Wärmetauschvorrichtung 10 jeweils im Abstand von einigen Metern Ausnehmungen 60 vorgesehen, in die je ein Ventilator 62 in einer üblichen Unterputz-Montagedose 63 eingebaut ist. Der Ventilator 62, der insbesondere als Axialventilator ausgestaltet sein kann, saugt Raumluft durch einen Einlass (in Fig. 3 nicht gezeigt) an und bläst die angesaugte Luft durch ein kurzes Verbindungsstück 64 in ein oder mehrere Luftverteilrohre 52.

Es versteht sich, dass der Betrieb des Ventilators 62 auf unterschiedliche Weise gesteuert oder geregelt werden kann; insbesondere kann ein Thermostat vorgesehen sein. In manchen Ausführungsformen wird als Ventilator 62 ein Flügelventilator mit einem Durchmesser von ungefähr 10 cm und einem Durchsatz von ungefähr 10 - 15 m³/h, vorzugsweise ungefähr 12 m³/h, eingesetzt. Eine vorteilhafte Strömungsgeschwindigkeit beträgt ungefähr 0,5 m/s bis 1,5 m/s, wobei eine temperaturabhängige Regelung der Ventilatordrehzahl vorgesehen sein kann. Zur Geräuschreduzierung kann ein gekapselter Ventilator 62 verwendet werden. Versuche haben ergeben, dass in manchen Ausgestaltungen ein einziger Ventilator 62 für Wandlängen von bis zu 8 m ausreicht.

In einer besonders einfachen Ausgestaltung saugt der Ventilator 62 die Raumluft an seiner in Fig. 3 rechten Seite durch einen Ausschnitt im Wandprofil 14 und durch das Wärmetauschregister 30 hindurch an. An dieser Stelle wird die an sich vorgesehene Luftströmung in der Wärmetauschvorrichtung 10 gestört. Dies wirkt sich jedoch insgesamt kaum aus, da der Störungsbereich nur einige Zentimeter breit ist und somit bei einem Abstand der Ventilatoren 62 von mehreren Metern kaum ins Gewicht fällt.

Die hier beschriebene Wärmetauschvorrichtung 10 weist insbesondere bei einem ventilatorunterstützten Kühlbetrieb eine hohe Kühlleistung auf, so dass an den Lamelleneinheiten 36 Kondensation auftritt. Die zum Auffangen des entstehenden Kondenswassers vorgesehene Kondenswasserrinne 12 weist ein Halteprofil 66 und ein in dieses eingesetztes Rinnenprofil 68 auf. Das Halteprofil 66 ist beispielsweise aus Aluminium gefertigt, während das Rinnenprofil 68 als Rollenprofil aus elastischem Kunststoff - z.B. einem PVC-Material ― ausgestaltet sein kann.

Die Kondenswasserrinne 12 befindet sich unter der Wärmetauschvorrichtung 10 am Boden 58 des Raumes, in dem das Kühlsystem montiert ist, und das Halteprofil 66 ist mit der Wand 56 oder dem Boden 58 verschraubt. In dem in den Figuren gezeigten Ausführungsbeispiel ragt die Kondenswasserrinne 12 etwas weiter in den Raum hinein als die Wärmetauschvorrichtung 10, während in Ausführungsalternativen die Wärmetauschvorrichtung 10 und die Kondenswasserrinne 12 gleich tief sind und daher an ihren raumzugewandten Seiten miteinander fluchten.

In dem Rinnenprofil 68 befindet sich in manchen Ausführungsformen eine Saugschnur 70, die einige Meter lang in der Kondenswasserrinne 12 ungefähr horizontal verläuft und dann einige Zentimeter in einen Kondenswasserabfluss (nicht gezeigt) nach unten ragt. Durch ihre Kapillarwirkung leitet die Saugschnur 70 Kondenswasser aus der Kondenswasserrinne 12 auch dann in den Kondenswasserabfluss, wenn die Kondenswasserrinne 12 - z.B. aufgrund von Unebenheiten des Bodens 58 - stellenweise leicht ansteigt.

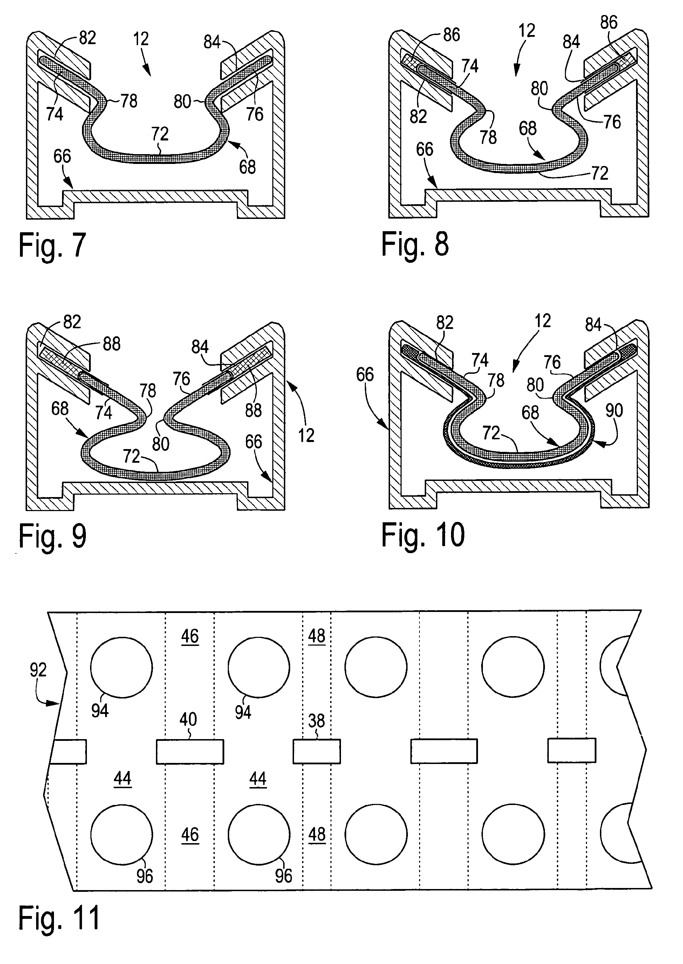

Fig. 7 zeigt eine vergrößerte Darstellung der Kondenswasserrinne 12 in der selben Schnittebene wie in Fig. 1 bis Fig. 3; die optionale Saugschnur 70 ist hier weggelassen. Das Rinnenprofil 68 besteht aus einem Mitteilteil 72 und zwei seitlich daran anschließenden, schräg nach oben weisenden Seitenstreifen 74, 76. An den Grenzen zwischen dem Mittelteil 72 und den Seitenstreifen 74, 76 weist das Rinnenprofil 68 je eine ungefähr rechtwinklige Biegung 78, 80 auf. Das Mittelteil 72, das in manchen Ausgestaltungen dünner als die Seitenstreifen 74, 76 sein kann, bildet die eigentliche Ablaufrinne für das Kondenswasser. Insgesamt weist das Rinnenprofil 68 ungefähr die Form eines auf dem Kopf stehenden Ω auf.

Die Seitenstreifen 74, 76 des Rinnenprofils 68 ragen in je einen schräg nach oben verlaufenden Aufnahmespalt 82, 84 des Halteprofils 66, wodurch das Rinnenprofil 68 im Halteprofil 66 gehalten wird. In der in Fig. 7 gezeigten Konfiguration, bei der die Seitenstreifen 74, 76 bis zum Anschlag in die Aufnahmespalte 82, 84 hineinragen, betragen der Abstand zwischen den Biegungen 78, 80 ungefähr 1 cm und der lichte Abstand zwischen der Unterseite des Mittelteils 72 an seiner tiefsten Stelle und dem Halteprofil 66 ungefähr 4 mm.

Um den Ablauf des Kondenswassers zu unterstützen, soll die tiefste Stelle des Mittelteils 72 des Rinnenprofils 68 ein leichtes Gefälle - z.B. ungefähr 3° ― hin zu dem Kondenswasserabfluss aufweisen, auch wenn der Boden, auf dem sich das Halteprofil 66 befindet, gerade ist. Das Rinnenprofil 68 ist jedoch als langes Rollenprofil mit einem im nicht eingebauten Zustand über die gesamte Länge hinweg einheitlichen Querschnitt ausgestaltet, weil dies eine einfache und billige Herstellung des Rinnenprofils 68 ermöglicht. Außerdem werden potentielle Dichtungsprobleme vermieden, wenn das Rinnenprofil 68 ein einziges langes Profilband ist.

Um eine leicht geneigte Ablaufrinne für das Kondenswasser trotz des einheitlichen Fertigungsquerschnitts des Rinnenprofils 68 bereitstellen zu können, ist im hier beschriebenen Ausführungsbeispiel vorgesehen, dass das Rinnenprofil 68 über die Länge der Kondenswasserrinne 12 hinweg unterschiedlich in das Halteprofil 66 eingesetzt wird. Genauer sollen die Seitenstreifen 74, 76 mit zunehmender Nähe zum Kondenswasserabfluss immer weniger weit in die Aufnahmespalte 82, 84 hineinragen. Wie in Fig. 8 und Fig. 9 gezeigt ist, sind hierzu im vorliegenden Ausführungsbeispiel geeignete Zwischenstücke 86, 88 vorgesehen, die seitlich auf die Seitenstreifen 74, 76 aufgesteckt werden und als Abstandshalter innerhalb der Aufnahmespalte 82, 84 dienen.

Die in Fig. 8 gezeigten Zwischenstücke 86 können beispielsweise bewirken, dass die Seitenstreifen 74, 76 jeweils um 2,5 mm weniger weit als in Fig. 7 in die Aufnahmespalte 82, 84 hineinragen. Wegen der Schräge der Aufnahmespalte 82, 84 wird dadurch das gesamte Rinnenprofil 68 nach unten verschoben. Überdies verringert sich der Abstand zwischen den Biegungen 78, 80 auf ungefähr 6 mm, wodurch das Mittelteil 72 des Rinnenprofils 68 etwas stärker gekrümmt wird und der Rinnenboden noch tiefer zu liegen kommt. Insgesamt befindet sich in Fig. 8 der Boden des Rinnenprofils 68 ungefähr 2 mm tiefer als in Fig. 7.

Die Zwischenstücke 88 in der in Fig. 9 gezeigten Schnittebene, die sich nahe dem Kondenswasserablauf befindet, füllen die Aufnahmespalte 82, 84 fast vollständig aus. Die beiden Biegungen 78, 80 sind bis auf ungefähr 1 mm zusammengeschoben. Der Boden des Rinnenprofils 68 liegt insgesamt etwa 4 mm tiefer als in Fig. 7 und berührt das Halteprofil 66. Der geringe Abstand zwischen den Biegungen 78, 80 ist vorteilhaft, weil dadurch verhindert wird, dass die durch die Wärmetauschvorrichtung 10 strömende und in Fig. 3 nach rechts austretende Luft Bakterien aus der Kondenswasserrinne 12 in den Raum befördert. Solche Bakterien können sich insbesondere nahe bei dem Kondenswasserablauf ansammeln, weil hier die Kondenswasserrinne 12 meistens feucht ist. Der Durchtritt des von der Wärmetauschvorrichtung 10 heruntertropfenden Kondenswassers wird auch bei einem geringen Abstand der Biegungen 78, 80 von 1 mm nicht behindert.

Die Zwischenstücke 86, 88 brauchen in Längsrichtung des Rinnenprofils 68 nur kurz - z.B. ungefähr 1 cm lang - zu sein, weil auch eine nur stellenweise Halterung des Rinnenprofils 68 in dem Halteprofil 66 ausreicht. Es versteht sich, dass außer den in Fig. 8 und Fig. 9 beispielhaft gezeigten Breiten der Zwischenstücke 86, 88 von ungefähr 3 mm und ungefähr 6 mm auch andere Breiten vorgesehen sein können. Beispielsweise kann ein farbcodierter Satz von insgesamt elf Zwischenstücken verwendet werden, deren Breiten in Stufen von je 0,5 mm bis auf 6 mm ansteigen. Diese Zwischenstücke können in Abständen von je ungefähr 30 cm an dem Rinnenprofil 68 angebracht werden, so dass sich über eine Länge von mehr als 3 m eine gleichmäßige leichte Neigung der durch das Mittelteil 72 gebildeten Ablaufrinne ergibt. Es versteht sich, dass die Kondenswasserrinne 12 in Ausführungsvarianten andere Dimensionen aufweisen kann.

Bei der in Fig. 10 dargestellten Ausführungsalternative ist statt zweier getrennter Zwischenstücke 86 (Fig. 8) ein einziges, sich über die gesamte Unterseite des Rinnenprofils 68 erstreckendes Zwischenstück 90 gezeigt. Auch das Zwischenstück 90 braucht in Längsrichtung des Rinnenprofils 68 nur einen oder einige wenige Zentimeter lang zu sein. Die durchgehende Ausgestaltung des Zwischenstücks 90 kann die Montage des Rinnenprofils 68 vereinfachen, indem zunächst das Zwischenstück 90 und dann erst das Rinnenprofil 68 in das Halteprofil 66 eingesetzt wird. Ferner kann durch das Zwischenstück 90 auch die gekrümmte Form des Rinnenprofils 68 beeinflusst werden.

Fig. 11 zeigt ein Lamellenblech 92, das zur Herstellung der Lamelleneinheit 36 verwendet wird. Das Lamellenblech 92 wird aus dünnem Aluminiumblech durch Stanzen hergestellt. Es weist Öffnungen 94 für das erste Rohr 32 und Öffnungen 96 für das zweite Rohr 36 auf. Die in Fig. 4 bis Fig. 6 gezeigten Kontaktgrate 50 an den Öffnungen 94, 96 sind durch den Stanzvorgang erzeugt worden. Die gestrichelten Linien in Fig. 11 zeigen die Biegelinien und damit die Grenzen zwischen den Lamellenabschnitten 44 und den Seitenabschnitten 46, 48. Die Öffnungen 38, 40 durchtrennen die jeweiligen Seitenabschnitte 46, 48 und ragen jeweils etwas in die angrenzenden Lamellenabschnitte 44 hinein.

Zur Herstellung des Wärmetauschregisters 10 wird das Lamellenblech 92 schlangenlinienförmig gebogen, so dass sich die in Fig. 6 gezeigte Konfiguration der Lamelleneinheit 36 ergibt. Mehrere solche Lamelleneinheiten 36 werden kann auf die Rohre 32, 34 geschoben und dort im Presssitz oder durch eine Lötung oder Schweißung oder Verklebung fixiert.

Um ein Kühlsystem oder ein kombiniertes Heiz- und Kühlsystem in einem Raum anzubringen, werden zunächst geeignete Kondenswasserabläufe im Boden 64 und Ausnehmungen 60 in der Wand 56 geschaffen. Die Ventilatoren 62 werden in die Ausnehmungen 60 - gegebenenfalls unter Verwendung von Montagedosen 63 - eingesetzt und elektrisch angeschlossen. Dann wird das Halteprofil 66 der Kondenswasserrinne 12 an der Ecke zwischen Wand 56 und Boden 58 mit dem Boden 58 verschraubt. Geeignete Zwischenstücke 86, 88 werden auf die Seitenstreifen 74, 76 des Rinnenprofils 68 aufgesetzt, und Abschnitte des Rinnenprofils 68 von je einigen Metern Länge werden - zusammen mit den Zwischenstücken 86, 88 - in das Halteprofil 66 eingesetzt.

Das Wandprofil 14 wird nun mit dem aufgesetzten oberen Abschlussprofil 16 an die Wand 56 angeschraubt. Vor jeder Ausnehmung 66 wird das Wandprofil 14 und gegebenenfalls auch das Abschlussprofil 16 durchbohrt oder ausgeschnitten, um eine Öffnung für den Lufteinlass des Ventilators 62 und für das Verbindungsstück 64 zu schaffen. Das Verbindungsstück 64, das beispielsweise in Form einer doppelten, flexiblen Schlauchleitung oder in Form einer sich Y-förmig gabelnden Schlauchleitung ausgestaltet sein kann, wird an die Enden zweier Luftverteilrohre 52 angeschlossen.

Schließlich werden in regelmäßigen Abständen die Träger 20 in das Wandprofil 14 eingeschoben. Mehrere Wärmetauschregister 30 werden in der gewünschten Orientierung - also entweder mit den breiten Seitenabschnitten 46 oder mit den schmalen Seitenabschnitten 48 zum Raum hin - auf die Träger 20 aufgesetzt, so dass die Rohre 32, 34 in den Ausnahmen 22, 24 einrasten. Nachdem die Rohre 32, 34 der Wärmetauschregister 30 untereinander und mit den Heiz- und/oder Kältemittelleitungen des Raumes verbunden worden sind, wird das seitliche Abdeckprofil 42 auf die Arme 26, 28 der Träger 20 aufgesetzt. Das Abdeckprofil 42 ist mehrere Meter lang und folgt ohne Unterbrechung - oder mit nur kaum sichtbaren Stoßfugen - dem Verlauf der Wärmetauschvorrichtung 10 entlang der Wand 56.

## Patentansprüche

1. Wärmetauschvorrichtung (10) zur Montage an einer Wand (56) nahe einem Boden (58) eines Raumes, mit einem Wandprofil (14), einem Abdeckprofil (42) und mindestens einem zwischen dem Wandprofil (14) und dem Abdeckprofil (42) angeordneten Wärmetauschregister (30) sowie einer Ventilationseinrichtung zum Befördern von Luft mit einer Strömungsrichtung von oben nach unten durch das Wärmetauschregister (30).

2. Wärmetauschvorrichtung (10) nach Anspruch 1, **dadurch gekennzeichnet, dass** die Ventilationseinrichtung mindestens ein in einem oberen Bereich der Wärmetauschvorrichtung (10) angeordnetes Luftverteilrohr (52) mit zumindest auch nach unten weisenden Luftauslassöffnungen (54) aufweist.

3. Wärmetauschvorrichtung (10) nach Anspruch 2, **dadurch gekennzeichnet, dass** die Ventilationseinrichtung mindestens einen in der Wand (56) angeordneten Ventilator (62) aufweist, der Luft in das mindestens eine Luftverteilrohr (52) einbläst.

4. Wärmetauschvorrichtung (10) zur Montage an einer Wand (56) eines Raumes, mit mindestens einem Wärmetauschregister (30), das mindestens ein Rohr (32, 34) und mindestens eine Lamelleneinheit (36) zur Vergrößerung der wirksamen Fläche aufweist, wobei die Lamelleneinheit (36) mehrere Lamellenabschnitte (44) und mehrere Seitenabschnitte (46, 48) in einer schlangenlinienförmigen Anordnung aufweist, wobei sich die Lamellenabschnitte (44) quer zu dem mindestens einen Rohr (32, 34) erstrecken und das mindestens eine Rohr (32, 34) durch die Lamellenabschnitte (44) hindurch verläuft und sich die Seitenabschnitte (46, 48) quer zu den Lamellenabschnitten (44) erstrecken und jeder Seitenabschnitt (46, 48) je zwei Lamellenabschnitte (44) seitlich miteinander verbindet.

5. Wärmetauschvorrichtung (10) nach Anspruch 4, **dadurch gekennzeichnet, dass** sich die Seitenabschnitte (46, 48) abwechselnd an einer ersten und einer zweiten Seite des Wärmetauschregisters (30) befinden, wobei die an der ersten Seite des Wärmetauschregisters (30) befindlichen Seitenabschnitte (46) breiter als die an der zweiten Seite des Wärmetauschregisters (30) befindlichen Seitenabschnitte (48) sind.

6. Wärmetauschvorrichtung (10) nach Anspruch 5, **dadurch gekennzeichnet, dass** das Wärmetauschregister (30) in unterschiedlichen Orientierungen in der Wärmetauschvorrichtung (10) montierbar ist, so dass entweder die breiteren Seitenabschnitte (46) an der ersten Seite des Wärmetauschregisters (30) oder die schmäleren Seitenabschnitte (48) an der zweiten Seite des Wärmetauschregisters (30) in Kontakt mit einem seitlichen Abdeckprofil (42) der Wärmetauschvorrichtung (10) stehen.

7. Wärmetauschvorrichtung (10) nach Anspruch 6, **dadurch gekennzeichnet, dass** die Wärmetauschvorrichtung (10) ein Wandprofil (14) aufweist, an dem Träger (20) für das mindestens eine Wärmetauschregister (30) und das Abdeckprofil (42) befestigbar sind.

8. Wärmetauschvorrichtung (10) nach einem der Ansprüche 1 bis 7, **dadurch gekennzeichnet, dass** die Wärmetauschvorrichtung (10) als Fußleistenheizung und/oder -kühlung ausgebildet ist.

9. Kondenswasserrinne (12) zur Montage an einer Wand (56) oder einem Boden (58) eines Raumes, insbesondere zur Verwendung mit einer Wärmetauschvorrichtung (10) nach einem der Ansprüche 1 bis 8, mit einem Halteprofil (66) und einem flexiblen und in dem Halteprofil (66) angeordneten Rinnenprofil (68), wobei das Rinnenprofil (68) durch Zwischenstücke (86, 88; 90), die entlang der Kondenswasserrinne (12) angeordnet sind, in unterschiedliche Konfigurationen gedrängt wird, um eine von einem Mittelteil (72) des Rinnenprofils (68) gebildete, geneigte Ablaufrinne für Kondenswasser zu schaffen.

10. Kondenswasserrinne (12) nach Anspruch 9, **dadurch gekennzeichnet, dass** das Halteprofil (66) Aufnahmespalte (82, 84) für Seitenstreifen (74, 76) des Rinnenprofils (68) aufweist, und dass sich die Zwischenstücke (86, 88; 90) zumindest teilweise in den Aufnahmespalten (82, 84) befinden.

11. Kondenswasserrinne (12) nach Anspruch 9 oder Anspruch 10, **dadurch gekennzeichnet, dass** die unterschiedlichen Konfigurationen, in die das Rinnenprofil (68) durch die Zwischenstücke (86, 88; 90) gedrängt wird, unterschiedliche Positionen des Rinnenprofils (68) und/oder unterschiedliche Querschnittskrümmungen des Mittelteils (72) des Rinnenprofils (68) umfassen.

12. Kondenswasserrinne (12) nach einem der Ansprüche 9 bis 11, **dadurch gekennzeichnet, dass** das Rinnenprofil (68) in seinem nicht in das Halteprofil (66) eingebauten und nicht mit den Zwischenstücken (86, 88; 90) versehenen Zustand eine über seine Länge hinweg gleichbleibende Querschnittsform aufweist.

13. Kondenswasserrinne (12) nach einem der Ansprüche 9 bis 12, **dadurch gekennzeichnet, dass** im Rinnenprofil (68) eine Saugschnur (70) zum Ableiten von Kondenswasser angeordnet ist.

14. System zur Heizung und/oder Kühlung eines Raumes, das eine Wärmetauschvorrichtung (10) nach einem der Ansprüche 1 bis 8 und eine Kondenswasserrinne (12) nach einem der Ansprüche 9 bis 13 aufweist.

15. Verfahren zur Herstellung eines Wärmetauschregisters (30), insbesondere eines Wärmetauschregisters (30) für eine Wärmetauschvorrichtung (10) nach einem der Ansprüche 1 bis 8, mit den Schritten:
- Bereitstellen mindestens eines Rohres (32, 34),
- Bearbeiten mindestens eines Lamellenblechs (92), indem Öffnungen (94, 96) für das mindestens eine Rohr (32, 34) in dem Lamellenblech (92) gefertigt werden,
- Biegen des Lamellenblechs (92), um eine Lamelleneinheit (36) mit mehreren Lamellenabschnitten (44) und mehreren Seitenabschnitten (46, 48) in einer schlangenlinienförmigen Anordnung zu erhalten,
- Aufschieben mindestens einer Lamelleneinheit (36) auf das mindestens eine Rohr (32, 34) durch zumindest manche der Öffnungen (32, 34), und
- Fixieren der mindestens einen Lamelleneinheit (36) auf dem mindestens einen Rohr (32, 34).

16. Verfahren zum Anbringen eines Heiz- und/oder Kühlsystems, insbesondere eines Systems nach Anspruch 14, an einer Wand (56) nahe einem Boden (58) eines Raumes, mit den Schritten:
- Schaffen mindestens einer Ausnehmung (60) in der Wand (56),
- Montieren mindestens eines Ventilators (62) in der mindestens einen Ausnehmung (60),
- Montieren einer Kondenswasserrinne (12) an der Wand (56) und/oder dem Boden (58),
- Montieren mindestens eines Profils (14, 16) mit mindestens einem Luftverteilrohr (52) an der Wand (56),
- Anschließen des mindestens einen Ventilators (62) an das mindestens eine Luftverteilrohr (52),
- Befestigen mehrerer Träger (20) an dem mindestens einen Profil (14, 16),
- Aufsetzen mindestens eines Wärmetauschregisters (30) auf die Träger (20), und
- Anbringen mindestens eines Abdeckprofils (42) an den Trägern (20).

17. Verfahren nach Anspruch 16, **dadurch gekennzeichnet, dass** die Kondenswasserrinne (12) ein Halteprofil (66) und ein flexibles Rinnenprofil (68) aufweist, und dass Zwischenstücke (86, 88; 90) an dem Halteprofil (66) und/oder dem Rinnenprofil (68) angeordnet werden, um das Rinnenprofil (68) innerhalb des Halteprofils (66) in unterschiedliche Konfigurationen zu drängen und somit eine geneigte Ablaufrinne für Kondenswasser zu schaffen.
